# EUROPEAN PATENT APPLICATION

(11) **EP 3 035 660 A1**
(43) Date of publication of application: **22.06.2016**
(21) Application number: 15460120.7
(22) Date of filing: 17.12.2015
(51) Int. Cl.: H04M 3/30

(54) **A METHOD FOR QUALIFYING A SUBSCRIBER LINE**

(30) Priority: 18.12.2014 PL 41061214
(71) Applicant: Orange Polska S.A., 02-326 Warszawa (PL)
(72) Inventor: Zych, Piotr, 38-480 Klimkówka (PL); Zawadzki, Konrad, 03-149 Warszawa (PL); Ratkiewicz, Marcin, 02-732 Warszawa (PL); Malysz, Krzysztof, 20-543 Lublin (PL); Staniszewski, Robert, 42-480 Poreba (PL)
(74) Representative: Palka, Grazyna

(57) **Abstract**

The invention relates to the method for qualifying the subscriber line, wherein prior to the step of retrieving (6) the line parameters a subscriber access device is connected (1) to the subscriber line, then the request for the initialisation of diagnostic measurements is transmitted (2), next there is configured (3) the port, and there are successively verified (4) the synchronisation, and (5) the customer premises equipment (20). After retrieving (6) the line parameters and prior to the step of writing (10) data into the database (17), in the event of positive verification of the earlier steps (4, 5), there are verified successively (7) the achieved bitrate of the subscriber line, (8) the link stability, and (9) possible damage to the line. After the step of writing data, the result of verification along with proceeding instructions is transmitted (11) along with the proceeding instructions to the device (21) that issues measurement requests and the default settings of the port parameters are restored (12a).

## Description

The object of the invention is a method for qualifying a subscriber line, dedicated to a broadband access network, based on data collected from the first device after CPE (Customer Premises Equipment) in a service provider network, for example, an access multiplexer DSLAM (Digital Subscriber Line Access Multiplexer), with OLT (Optical Line Termination).

Qualifying a subscriber line is an important step prior to the start of the process of service provisioning. It is a process during which there are carried out measurements of the line, on which no services are running yet, in order to determine the possibility of launching these services. Properly performed qualification of the subscriber line allows obtaining technical information about network resources (copper line, etc.), so that when a customer orders a new service in is known exactly what one can offer him. The proper implementation of the line qualification can minimise subsequent complaints from Customers, and thus costs of maintenance. It also allows maximise the transmission bitrate achieved at a given link.

There are known systems performing the DLM (Dynamic Line Management) functionality, such as NA5530 by the Alcatel-Lucent company. These systems periodically retrieve data from the entire network of all subscriber lines. Collected data is subject for further analysis and correlation. On their basis the system assesses the stability of the line, and then makes decisions about subsequent steps to be taken in relation to the line. The decisions may relate to, for example, the change of the profile on a DSLAM/OLT port to optimised, allowing to improve the link operation.

Systems of this kind, however, cannot be used at the step of qualification, as for a proper operation they require several days of history of line parameters that do not exist in the case of new lines.

These systems use data from active devices, regardless of the type of customer premises equipment.

From the patent description US 7593833 B2 there are known: a system and a method, wherein the system has numerous instructions allowing to obtain a set of measurements that include measurements related to the communication line, implemented in reactive or proactive way. The efficiency parameter for a line is determined on the basis of the measurements performed and is compared with a reference measurement for determining the efficiency of the line. Test results are recorded in an appropriate database. The solution includes the initialisation of measurements during the qualification phase, remote performance of the measurements, and storage of the results in a database. For proper operation the information about the history of actions is necessary to determine the test results.

The solution from the patent description US 7460483 B2 relates to a system for remote measurements of access network for managing performance of communication lines. Customer premises equipment for diagnostic testing is identified by introducing the line identifier to the system via a Web server, using any device capable of communicating over a network. The identifier line is then mapped to the port number in a DSLAM device to which the system transmits a command to run diagnostic tests for the line with the customer premises equipment communicated with this port. The test results are returned to the system and then go to the user commissioning the test and additionally are stored in a database. The process of diagnostic tests may be performed remotely using wireless devices, and the results are returned in real time.

According to the patent US 7460483 B2, there is provided a possibility to carry out remote tests at the user's request (interrogation request) using an interface prepared for this. Diagnostics is based on the data transmitted in real time, which data can be additionally stored for further analysis. In one of the steps of the solution it is possible to generate and transmit "trouble ticket" messages.

The solution from the patent application US 20110106588 A1 relates to a system and a method for facilitating the installation and qualification of subscriber lines. The method according to the application involves receiving installation and qualification request for a specific subscriber line, then determining efficiency parameters of subscriber lines installed in the vicinity of the line being installed. Based on the information from the database, the installation criteria for the line being installed is updated, efficiency tests for the line being installed are carried out and their results are compared with the installation criteria. Then, this information is transmitted along with instructions on how to proceed further to a technician equipped with a communication device.

The above solution is used at the step of the installation and qualification of subscriber lines, it uses writing information into the database and operation in real time.

The solutions known hitherto that support the qualification process have a number of limitations:
- commercially available meters for the measurement of transmission parameters of the physical layer have built-in systems that are not always compatible with those used in modems offered in the target service, which leads to falsification of results;
- the process of implementation of new meters to support every new technique is very expensive and time-consuming, requiring multiple training courses;
- it is often necessary to replace the fleet of meters due to a change in the technology used in the network (the process of implementation of new software to the available meters is long and expensive);
- inability to map installation and maintenance procedures in logical systems of devices;
- the absence of ongoing support in the qualification and diagnostics process from the substantive units;
- the need for manual configuration of the meter and transmitting the results to a central location results in a very low efficiency of processes;
- often it is not possible to transmit the results in real time.

In the solutions known from the prior art there occur technical problems associated with the use of meters. In addition, it is often required to store and use the history of measurements of subscriber lines. The method according to the invention allows efficient qualification of the subscriber line, while forfeiting the use of meters, and without knowledge of the history of earlier measurements.

A method for qualifying a subscriber line according to the invention, wherein the line parameters are retrieved by the system, data is written into a database and proceeding instructions are transmitted, characterised in that prior to the step of line parameters retrieving a subscriber access device is connected to the subscriber line, then, using a communication channel, through a device that issues measurement requests, the request for initialisation of diagnostic measurements is transmitted, using a server on a central office device, port is configured and, using server, synchronisation is verified and the customer premises equipment is verified. After retrieving the line parameters and prior to the step of writing data into the database, in the event of positive verification of the earlier steps, the achieved bitrate of the subscriber line is verified, the link stability is verified, and possible damage to the line is verified. After the step of writing data the result of verification along with proceeding instructions is transmitted back through the system to the device that issues measurement requests and, through the server, the default settings of the port parameters are restored.

Preferably, in the event of negative verification of the synchronisation, through the system, the result of the verification is transmitted back along with the proceeding instructions to the device that issues measurement requests.

Preferably, in the event of negative verification of the customer premises equipment, through the system, the result of the verification is transmitted back along with the proceeding instructions to the device that issues measurement requests.

Preferably, in the measurement initialisation request is transmitted at least one identification parameter from a group comprising: service identifier, service version, service type, line identification data, central office device IP address, port number.

Preferably, at the step of the port configuration, through the server, there is transmitted to the central office device and set at least one configuration parameter, dependent on the transmitted request, from a group comprising: static configuration parameter and dynamic configuration parameter.

Preferably, as the configuration parameters for the step of the port configuration there is used at least one parameter from a group comprising: port administrative status, physical layer profile name, data link layer virtual port for the Internet service, data link layer virtual port for the TV service, data link layer virtual port for the VoD service, data link layer virtual port for the VoIP service. Preferably as the dynamic configuration parameter there is used at least one parameter from a group comprising: static sub-parameter and dynamic sub-parameter.

Preferably, at the step of verification of the synchronisation, the port for the measurement is configured and forced to resynchronise. As the synchronisation verification parameters there are used port administrative status and port operational status and at least one parameter from a group comprising the number of synchronisation attempts and the number of unsuccessful synchronisation attempts, wherein for the port specified in the request the values of the administrative status and operational status are read and compared with a reference value. In addition, the values of one of the other parameters of the step of synchronisation verification are read at a time interval and the achieved values are compared, wherein in the event of negative results of the previous sub-steps they are repeated with the emergency profile turned on.

Preferably, at the step of verification of the customer premises equipment, the customer premises equipment verification parameters are compared with the parameters stored in the database of the system, wherein as the parameters of the step of customer premises equipment verification there is used at least one from a group comprising: device serial number, device manufacturer identifier, device software version.

Preferably, at the step of the achieved bitrate verification the achieved bitrate is compared with the parameters for the point in which measurements are done.

Preferably, for the link stability verification parameters there is used at least one parameter from a group comprising: FEC parameter, CRC parameter, SES parameter, ES parameter, HEC parameter, the number of synchronisation attempts, the number of unsuccessful synchronisation attempts, wherein the positive link stability verification is achieved when the values of all the link stability verification parameters are below specified thresholds.

Preferably, as the line damage verification parameters there is used at least one of the parameters: HLOG, QLN, BIT LOAD and SNR(f).

Preferably, at the step of restoring the default settings, as the parameters there is used at least one from a group comprising: port administrative status, physical layer profile name, data link layer virtual port for the Internet service, data link layer virtual port for the TV service, data link layer virtual port for the VoD service, data link layer virtual port for the VoIP service.

Preferably, in the event of performing of the measurement on the main distribution frame between the step of retrieving the subscriber line parameters and the step of writing the data into the database, only the achieved subscriber line bitrate is verified.

Preferably, transmitting the request via communication channel is carried out by at least one from the group comprising: SMS message, dedicated network service, mobile device application, web site.

Preferably, in the proceeding instructions there is used the possible diagnostic information, and at least one instruction from the group comprising the instructions: "check the connection quality", "check the presence of connection disruptions", "repeat the measurement", "locate and remove the bridged tap", "locate and remove the source of interference on the line", "change the cable to another", "change the port", "check the efficiency of the subscriber device", "replace the subscriber device", "verify registration data of the service", "end of activities".

The solution according to the invention has the following advantages:
- reducing costs - the abandonment of expensive, specialised solutions of commercial meters;
- ensuring maximum reliability of results due to collection of information directly from the subscriber devices - to avoid the problem of different characteristics of the chipsets of meters available on the market;
- standardising the reporting mechanism;
- minimising human errors, thanks to the full automation of the processes - full central management of the designed process;
- full information on technician's activities performed in the course of carrying out the procedures;
- supporting the qualification and maintenance of the line on the system completely controlled by the service provider, adapted to the local network characteristics;
- central collection of technical data on a given subscriber line since the moment of qualification, i.e. construction of the full history of subscriber lines, allowing for optimised decision-making, for example, how to maintain them;
- easy expansion and integration with other service provider systems using collected data;
- the ability of quick deployment and expansion of the solution in the event of introducing new techniques, services or access procedures to the network;
- quick adaptation of the solution characteristics to changing internal procedures and service offer;
- the ability to quickly modify the operating mechanisms, regardless of suppliers;
- ensuring full location of the system and the service provider's environmental conditions - communication in the language required by the service provider.

Flexibility of the solution allows to use it in multiple places. The solution may be used by telecom service providers having their own access networks with active telecommunication devices: DSLAM, OLT; service providers based on infrastructure made available to them (BSA - Bit Stream Access; LLU -Local Loop Unbundling), as well as entities which are subcontractors for the aforementioned entities.

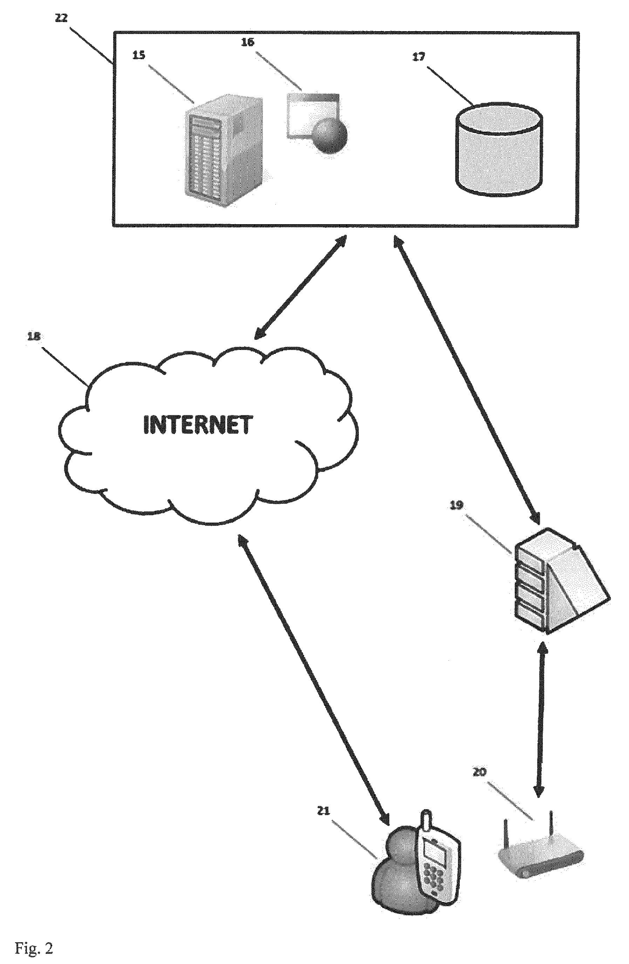

The object of the invention is shown in the embodiment on the accompanying drawings, in which Fig. 1 shows a block diagram of the particular process steps, and Fig. 2 - schematic simplified structure of the network which uses the method according to the invention, Figs. 3a and 3b - exemplary graphs of HLOG and BIT LOAD waveforms, Figs. 4a and 4b - exemplary graphs of HLOG and BIT LOAD waveforms, Figs. 5a and 5b - exemplary graphs of HLOG and BIT LOAD waveforms, Fig. 6 - a block diagram of the line damage verification step, Fig. 7 - diagram of an exemplary method for detecting minima.

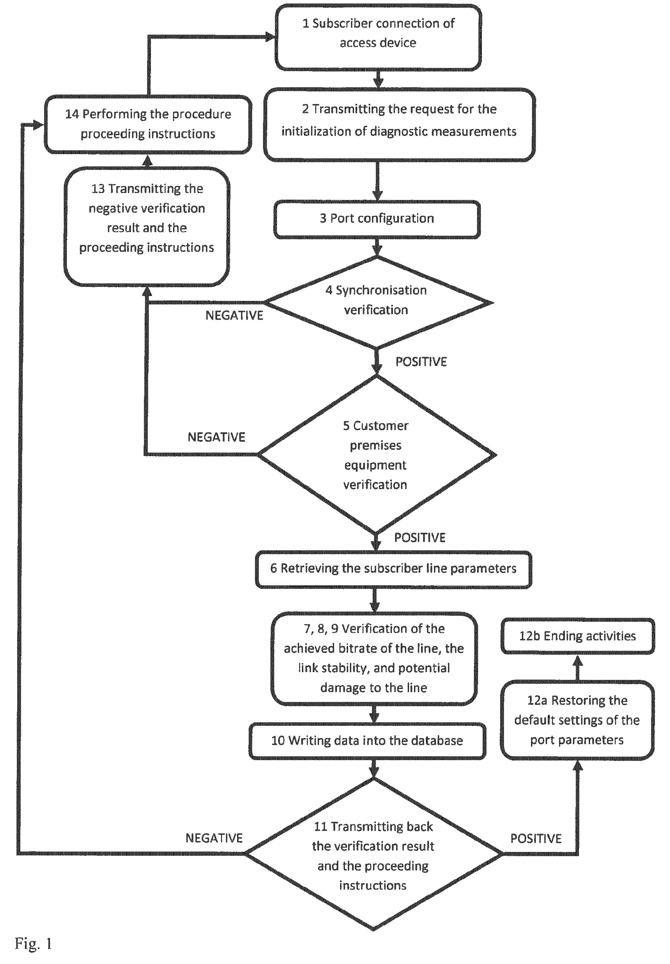

The particular steps of the method for qualifying the subscriber line are shown in Fig. 1. The technician, working with the device 21, at step 1 connects to the subscriber line with the subscriber access device, such as the customer premises equipment 20 (CPE), which he has, and which is identical with the devices offered to customers by the service provider. Then, via the communication channel, which can be a wireless network 18 (Internet) or a fixed network, via the device 21 issues measurement requests, such as a mobile phone, using SMS messages there is transmitted at step 2 the request for the initialisation of diagnostic measurements. The request must contain the parameters allowing unique identification of a network resource on which the measurements should be carried out, as well as additional parameters, such as the service type. Further, by means of the server 15, on the central office device, such as DSLAM 19, at step 3 the port is configured. Next, by means of the server 15, at step 4 the synchronisation is verified, and at the positive verification, also by means of the server 15, the step 5 of the customer premises equipment 20 verification is performed. Upon successful verification the system 22 reads, retrieves at step 6 the line parameters that are characteristic for selected access technology and type of device, such as line attenuation (uplink and downlink), the number of transmission CRC errors (cyclic redundancy check errors counter) - up and down the network - or HLOG parameter. The parameters are retrieved periodically, for example, 20 times at an interval of 15 seconds (for 5 minutes in total), and in another embodiment the measurement may take 15 minutes. Then, by means of the system 22, at step 7 the achieved subscriber line bitrate is verified, at step 8 link stability is verified, and at step 9 possible line damage is verified, which means carrying out a full diagnosis of the subscriber line. The achieved results, along with retrieved parameters, are written by the system 22 at step 10 in the database 17. The achieved result of verification, by means of the system 22, is transmitted at step 11 along with proceeding instructions to the device 21 that issues measurement requests, i.e. the mobile phone in this case. The proceeding instructions transmitted may be diagnostic information and instructions from a group comprising: "check the connection quality", "check the presence of connection disruptions", "repeat the measurement", "locate and remove the bridged tap", "locate and remove the source of interference on the line", "change the cable to another", "change the pair on the feeder cable", "change the pair on the distribution cable", "change the port", "check the efficiency of the subscriber device", "replace the subscriber device", "verify registration data of the service". In general, as for the content, feedback messages can be divided into:
- sentential (e.g. "Result - link damage");
- parameterised (e.g. "Bitrate=124424, Status=Up, Delay=1").

The technician, working with the device 21, at step 14 performs activities in accordance with the proceeding instructions, namely, for example: removes the source of interference on the subscriber line and is repeating the measurement. If, however, he receives the information that the installation of the subscriber line was successful, then at step 12a the default settings of port parameters are restored and at step 12b the measurements are ended.

The above embodiment is a general representation of the steps of the method for qualifying the subscriber line. A detailed description of embodiments of the particular steps of the method according to the invention is presented below.

In the embodiment, in which, after the port configuration verification at step 3, the synchronisation verification at step 4 is negative, the result of the synchronisation verification achieved at step 4, by means of the server 15, is transmitted back at step 13 along with the proceeding instructions to the device 21 that issues measurement requests to carry out at step 14 appropriate corrective actions.

In a further embodiment, the port configuration at step 3 and the positive synchronisation verification at step 4 are followed by step 5 of the customer premises equipment 20 verification. In a situation when it is completed negatively, the result of the customer premises equipment 20 verification achieved at step 5, by means of the server 15, is transmitted back at step 13 along with the proceeding instructions to the device 21 that issues measurement requests to carry out at step 14 appropriate corrective actions.

In various embodiments, the request for the initialisation of diagnostic measurements can be transmitted in various forms, for example, as an SMS message, then the measurement results are transmitted at steps 11 and 13 through the system 22 to the mobile phone, also via SMS. In the case of communication via SMS it is only needed that the technician working with the device 21 have any mobile phone.

In another embodiment, the request is initiated by voice, using IVR (Interactive Voice Response) processing. The user / technician with the keyboard enters to the device 21 that issues measurement requests the appropriate options, and the results are transmitted by voice or transmitted via SMS.

In a further embodiment, the initialisation request and receiving the results are performed using the application protocol (an application) on the device 21 that issues measurement requests, such as a mobile phone. The protocols to be applicable between the application on a mobile device and the server 15 are:
- WebService (SOAP - Simple Object Access Protocol or REST -Representational State Transfer);
- HTTP - Hypertext Transfer Protocol [request based on the GET and POST methods, responses formatted in accordance with XML (Extensible Markup Language) or JSON (JavaScript Object Notation)];
- CORBA (Common Object Request Broker Architecture);
- Java RMI (Java Remote Method Invocation);
- Designed protocol based on the TCP (Transmission Control Protocol) protocol, transmitting data in XML or JSON format.

When using a dedicated application for a mobile phone it should be a mobile phone, preferably a smart phone, with the installed application dedicated to the implementation of such communication. Another device 21 that issues measurement requests can be: tablet, phablet, laptop, PDA, notebook, etc.

In another embodiment, it is possible to transmit at step 2 the initialisation request using a web browser. This requires sharing through the server the website on which, using a web browser in a mobile phone, one can initiate measurements and display the results. In this case the applied protocols are HTTP / HTTPS and HTML (HyperText Markup Language). In the case of such a web communication, the mobile phone needs to be a phone with Internet access and a browser.

In a further embodiment, the system 22, on the basis of the service identifier received in the initialisation request from the inventory system, system 22 retrieves a list of the following parameters: service version, service type, line identification data, central office device 19 IP address, port number, and then initiates the measurement. If the service provider has an inventory system, the request for the initialisation needs to include only a unique service identifier.

In another embodiment, step 3 of the port configuration is performed by the server, through the system, which on the basis of data contained in the request for the initialisation, i.e., for example, on the basis of a unique service identifier, transmitted in the SMS message, performs at step 3 the port configuration on DSLAM 19.

The exemplary parameters used in this step are:
- port administrative status (on, off), the result is positive when the status is on,
- physical layer profile name - a dynamic parameter in relation to the order data and set individually for each service provider,
- service port (data link layer virtual port) for the Internet service - this port is a dynamic parameter and should exist in the case when the initialisation request data indicate that the Internet service should be activated. Additionally, service port includes its own list of parameters, from which the following are retrieved and verified:
   o service port administrative status (on, off) - the correct value: on;
   o assigned UNI (User Network Interface) point - a dynamic value depending on the data of the request for the initialisation;
   o assigned NNI (Network to Network Interface) point - a dynamic value depending on the data of the request for the initialisation;
- service port (data link layer virtual port) for the TV service - this port is a dynamic parameter and should exist in the case when the initialisation request data indicate that the TV service should be activated. Additionally, service port includes its own list of parameters, from which the following are retrieved and verified:
   o service port administrative status (on, off) - the correct value: on;
   o assigned UNI point - a dynamic value depending on the data of the request for the initialisation;
   o assigned NNI point - a dynamic value depending on the data of the request for the initialisation;
- service port (data link layer virtual port) for the VoD service - this port is a dynamic parameter and should exist in the case when the initialisation request data indicate that the VoD service should exist. Additionally, service port includes its own list of parameters, from which the following are retrieved and verified:
   ∘ service port administrative status (on, off) - the correct value: on;
   ∘ assigned UNI point - a dynamic parameter depending on the data of the request for the initialisation;
   ∘ assigned NNI point - a dynamic parameter depending on the data of the request for the initialisation;
- service port (data link layer virtual port) for the VoIP service - this port is a dynamic parameter and should exist in the case when the initialisation request data indicate that the VoIP service should exist. Additionally, service port includes its own list of parameters, from which the following are retrieved and verified:
   ∘ service port administrative status (on, off) - the correct value: on;
   ∘ assigned UNI point - a dynamic parameter depending on the data of the request for the initialisation;
   ∘ assigned NNI point - a dynamic parameter depending on the data of the request for the initialisation.

In one embodiment, the exemplary parameters used at the step of the port configuration are:
1. Port administrative status, which has the default value OFF. This is a static parameter and the system configures its value to ON.
2. Physical layer profile name - may have different default values depending on the manufacturer of the device used. Typically, the default value is NULL (= no value), an empty string, or "Default profile" (DEFVAL). The system, depending on the request parameters, configures (sets) the physical profile name. For example, for the service of the bitrate of 40 Mbit/s it may be Internet40 (or any other dynamically determined value).
3. Data link layer virtual port - is created depending on the parameters of the initialisation request. If in the parameters of the initialisation request there was indicated the Internet service, then there is created the virtual port Internet. When configuring also the parameters of such data link layer virtual port are set.

If in this embodiment the entire method is completed successfully and a relevant information is transmitted to the device 21 that issues measurement requests, then at step 12a there are restored the default process parameters, namely:
1. Port administrative status is set by the system to OFF.
2. Physical layer profile name is set by the system to the default.
3. If the data link layer virtual port Internet was created - it is removed.

At step 4 of the synchronisation verification, the server 15, on the basis of data contained in the request for the initialisation, is awaiting at the indicated resource to achieve synchronisation. The parameters necessary at this step include:
- Administrative Status (AS);
- port Operational Status (OS) - the parameter which informs whether the subscriber line is working at all; this qualification criterion is met if the subscriber line is working.

In addition to the above parameters, there is used the number of synchronisation attempts (FI - Full Initialisation Counter) and the number of unsuccessful synchronisation attempts (FFI - Failed Full Initialisation Counter).

First, through the system 22, the port for the measurement is configured and if it is allowed by the devices used in the measurement, Loop Diagnostic Mode is turned on and subsequently resynchronisation is forced. Then, at the appropriate time, the system 22 reads parameters such as: FI or FFI, and saves their current time. Next, the system 22 reads the values of AS and OS and compares them with a reference value. In case of compliance negative comparison verdict with a reference value, system 22 measures current time and checks whether the difference between the current time and the time measured at the step of reading the parameters related to the number of synchronisation attempts is less than 3 minutes. If the difference does not exceed 3 minutes, the system 22 waits another 5 seconds and then again reads AS and OS, and again performs the subsequent actions. But in the case of negative comparison with a reference value verdict, and when the time difference exceeds 3 minutes, the system 22 again reads the number of FI or FFI, and transmits the information about the absence of synchronisation to the device 21 that issues measurement requests. Next, the read values of the parameters associated with the numbers of synchronisation attempts at different times are compared and, depending on the results, to the device 21 that issues measurement requests there are transmitted information about occurring or non-occurring synchronisation attempts along with instructions to check the quality of the connection or if there is no connection interruption. Next the system 22 checks whether the emergency profile (Emergency) is turned on. If it is turned on, then to the device 21 that issues measurement requests at step 13 there is transmitted a message about applying at step 14 the previous instructions and repeating the measurement. If the emergency profile is not turned on, then the system 22 turns on the emergency profile, or reconfigures DSL physical layer and repeats the whole process from the moment of the first reading of the parameters FI and FFI. The whole step 4 of the synchronisation verification is performed no more than twice. In the absence of synchronisation the system 22 attempts to automatically reconfigure to the emergency profile in order to assess the real possibilities of the subscriber link.

The next step of the method for qualifying the subscriber line is the customer premises equipment 20 verification at step 5 performed by the server 15 on the basis of the data contained in the request. The server 15 proceeds to identify the customer premises equipment 20 for which the measurement is to be made. Identification is based on:
- device serial number;
- device manufacturer identifier;
- device software version.

The customer premises equipment 20 verification at step 5 involves comparing the above-mentioned three parameters with those stored in the database 17 of the system 22. Before measurements, an administrator saves in the database 17 of the system 22 the above-mentioned three parameters that are declared by a technician working with the device 21, and that determine exactly the unique device specimen 20, on which measurements will be performed. Verification involves comparing the declared parameters with the ones currently read from the device. This ensures that the measurement is performed at the appropriate device that is accepted for measurement.

In the event of failure in finding the customer premises equipment 20 on the specified port (the port number is retrieved from the SMS message as a parameter), the server 15 retrieves the three specified parameters for all other ports available on the device to search for the modem on a resource other than the specified one. In the event of finding the modem on another resource, the system 22 specifies in a feedback message where the modem was found and how many ports constituted a mistake.

In the event of an incorrect identification of a device (a device other than the declared one), the server 15 proceeds to verify whether the appropriate device was connected on another resource. For this purpose, the parameters defined above are verified for each port on the specified device. After this step, the server 15 transmits at step 13 the feedback information with instruction to change the connection.

At step 5 of the customer premises equipment verification 20, the system 22 confirms whether the technician working with the device 21 uses equipment that is assigned to him, allowing to verify whether he uses the appropriate equipment and whether he is in the correct location on the network.

After positive customer premises equipment 20 verification at step 5 the system 22 reads at step 6 the line parameters which are characteristic for the selected access technology and the type of device. The exemplary parameters are:
- line attenuation (uplink and downlink);
- achieved bitrate (uplink and downlink);
- maximum attainable bitrate (uplink and downlink);
- distribution of bits on carriers, BIT LOAD (uplink and downlink);
- transmitted power (uplink and downlink);
- power spectral density (uplink and downlink);
- the number of transmission CRC errors - CRC (uplink and downlink);
- the number of corrected errors - FEC (uplink and downlink);
- the number of severely errored seconds - SES (uplink and downlink);
- transmission mode;
- operational status;
- the number of resynchronisations;
- HLOG (Logarithmic Channel Characteristics Function) parameter;
- QLN (Quiet Line Noise) parameter - noise on the line without transmission;
- SNRM (Signal to Noise Ratio Margin) parameter - the noise margin.

Retrieving data involves cyclical retrieving these parameters. The parameters are retrieved, for example, 20 times at an interval of 15 seconds (for 5 minutes in total), however, the measurement may also take 15 minutes if the method is to have greater accuracy.

The server 15, on the basis of the collected information, verifies correct operation of the service, i.e. verifies at step 7 the achieved subscriber line bitrate, at step 8 verifies the connection stability, and at step 9 verifies possible line damage.

The achieved bitrate verification at step 7 involves comparing the value of the "achieved link bitrate" parameter with the parameters of the location of the measurement. For example, in the event of using the method with a short line of copper (on the main distribution frame or when the length of the subscriber line is short), the achieved bitrate has to be maximum or nearly maximum. In the case of a long line it is confirmed whether the reduction of the current bitrate is appropriate in relation to the length of the line, and too large reduction of bitrate indicates a damage.

At step 8 of the link stability verification, the following parameters are used:
- FEC (Forward Error Correction Counter) parameter - the counter of errors corrected using error correction mechanism;
- CRC (Cyclic Redundancy Check Counter) parameter - the counter of frames not meeting the checksum conditions, i.e. with errors;
- SES parameter - the counter of seconds with severe errors;
- ES (Errored Seconds) parameter - the counter of seconds with errors;
- HEC (Header Error Control) parameter - the counter of frames not meeting the checksum conditions in the header, i.e. with errors in the header;
- the number of synchronisation attempts FI, which informs about the number of synchronisation attempts of a given line; exceeding the relevant threshold results in failure to meet a qualification criterion, for example, increase in the value of this parameter during the measurement may not exceed 1 during a 5 minute measurement and 2 during a 15 minute measurement;
- the number of unsuccessful synchronisation (resynchronisation) attempts.

The positive link stability verification at step 8 is achieved when the values of all parameters of the link stability verification at step 8 meet the following conditions, i.e. in this embodiment they are below the set threshold values:
- increase in the number of FEC errors < 5000;
- increase in the number of CRC errors < 1500;
- increase in the number of SES errors < 500;
- increase in the number of resynchronisations < 1.

The exemplary sample is 20 values. If any of the defined conditions is not met, then the line is considered to be unstable and a qualification criterion is not met.

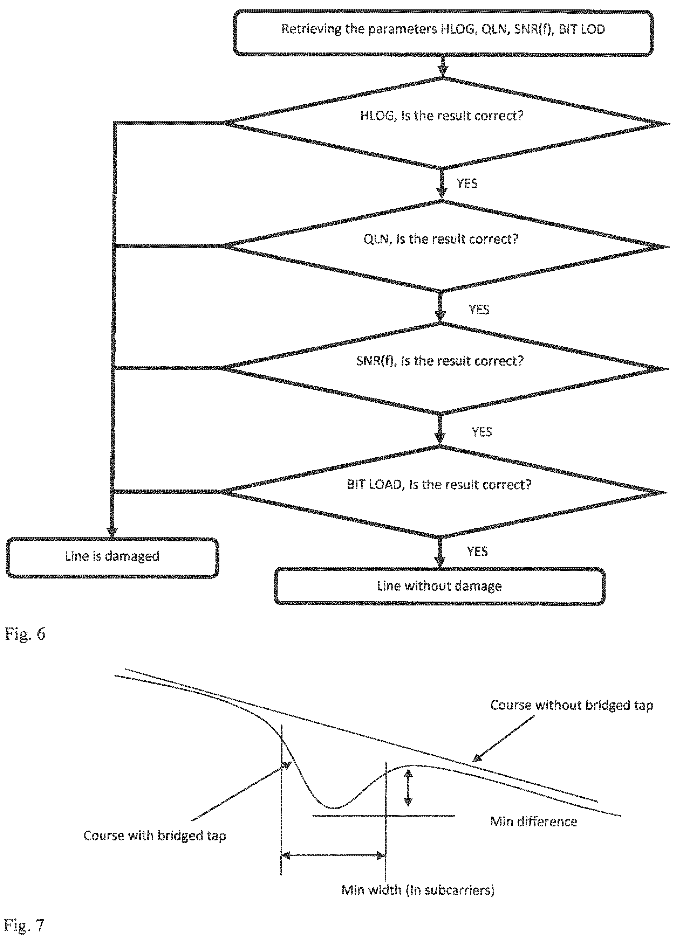

At step 9 of the line damage verification (Fig. 6) the following parameters are used:
- HLOG;
- QLN;
- BIT LOAD;
- SNR(f) - the signal to noise ratio for each carrier.

All these four parameters are defined relative to the carrier, which means that they are defined as an array of values of a maximum length of 4096 values (for VDSL2).

Valid values for these parameters are:
a) HLOG - logarithmic course without disturbance;
b) QLN - value should not exceed -110 dBm/Hz
c) SNR(f) - value should not drop below 30 dB
d) BIT LOAD - ideal course is a drop in the number of bits per carrier for ever higher carriers (increasing supressing), disturbance in the course may be caused by crosstalks from other lines (e.g. from ADSL lines).

HLOG parameter is retrieved once at any time of measurement, for VDSL2 links it has 4096 values, each of which corresponds to the attenuation at a particular carrier. It means that HLOG, like any of the other four mentioned parameters, can be displayed on the graph. Step 9 of the line damage verification using HLOG parameter involves finding minima on a list (graph) of 4096 values. The proper course of HLOG in simplifying constitutes a logarithmic curve, without any disturbances. If there are minima, then the line is broken and the qualification criterion is not met. One type of damage that can be detected using HLOG parameter HLOG is a bridged tap. On the basis of the existing minima, system can determine the length of the bridged tap and give it to the technician working with the device 21, for an easier finding and removal.

Another type of damage to the line is the occurrence of the capacitive asymmetry. Capacity asymmetry is characterised by at least one HLOG parameter minimum between carriers of 50 and 800, assuming a standard width of the DSL carrier equal to 4.3125 kHz.

Another parameter used at step 9 of the line damage verification is QLN. This parameter determines the level of noise on each of 4096 carriers. If the noise on a selected number of carriers (e.g. 50) exceeds the permissible level (e.g. more than -110 dBm/Hz), it indicates too high noise level. In such a case the technician working with the device 21 is informed of this fact to repair the damage. If noise is present on the carriers of 0-511, it means that it comes out of ADSL bands and the technician working with the device 21 should be notified.

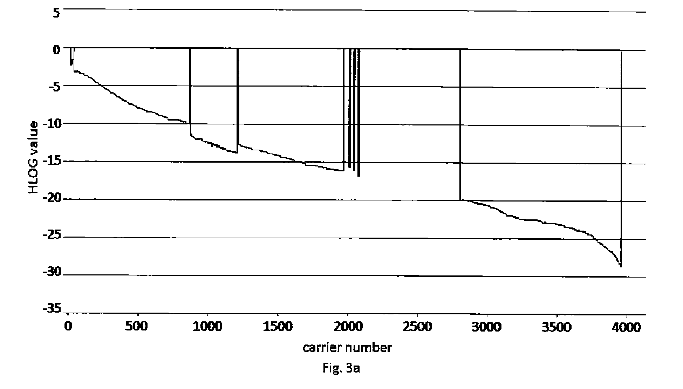

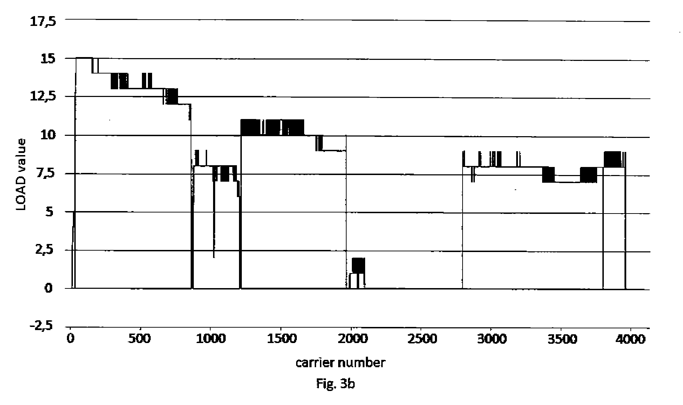

In the embodiment, in which:
- HLOG course is a logarithmic course without disturbances (Fig. 3a);
- BIT LOAD has a correct course (Fig. 3b) without visible fluctuations in bit allocation, in which the values of individual directions (downlink and uplink) are different due to the different transmitted powers and achieved bitrates; for example, in the direction to the customer at low carriers there has been achieved the maximum bit allocation, which amounts to 15 bits per carrier;
- QLN values do not exceed the set thresholds;
- in terms of the signal to noise ratio, for each carrier there is met the predefined condition;
step 9 of the line damage verification ends with a notice that the line is operational.

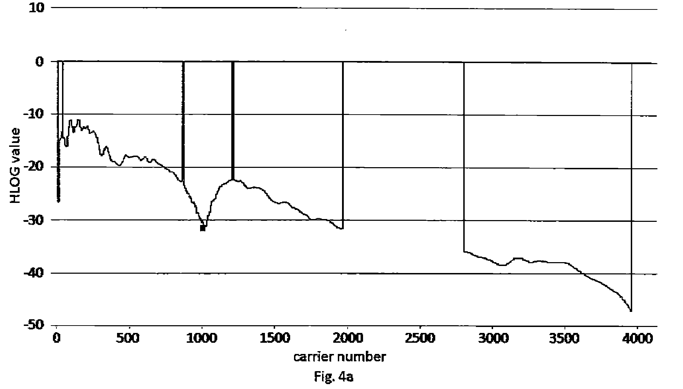

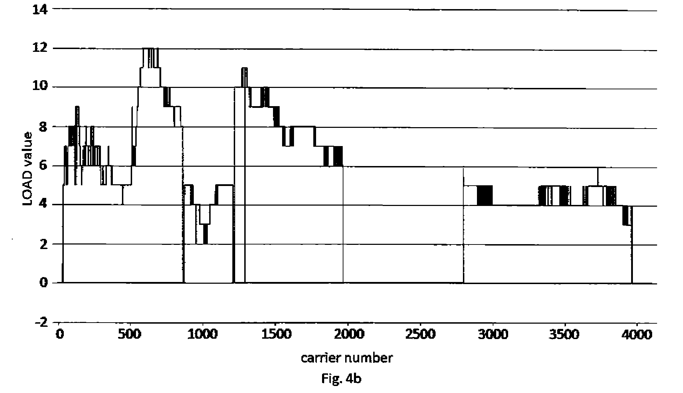

In another embodiment, in which:
- HLOG course is approximately a logarithmic course (Fig. 4a) but has one large minimum (on the carrier of approximately 1000) and a few smaller ones; the minimum on the carrier of approximately 1000 suggests that the line has a bridged tap connected of a length of approximately 8 metres, which significantly degrades the transmission parameters; other minima inform about additional damages (such as a disorder of the capacitive symmetry of a cable);
- BIT LOAD course (Fig. 4b) - in the direction of transmission from the customer it shows a large reduction in the amount of allocated bits (shown on the same carrier as in the HLOG course), which may be due to an additional attenuation caused by the bridged tap; in addition, far end crosstalks from ADSL2+ transmission, which uses the carriers of up to 511, are visible as reductions in the bit values per carrier for the carriers of below 550;
- QLN values do not exceed the accepted thresholds for the carriers of above 550, but for the ones of below 550 exceeding of the threshold occurs due to crosstalks from ADSL2+ transmission;
- in terms of the signal to noise ratio, due to the reduction of the number of bits per carrier, for each carrier there is met the predefined condition;
step 9 of the line damage verification ends thus indicating that the line is not operational because of the bridged tap of a length of approximately 8 metres and because of the capacitive asymmetry of the cable.

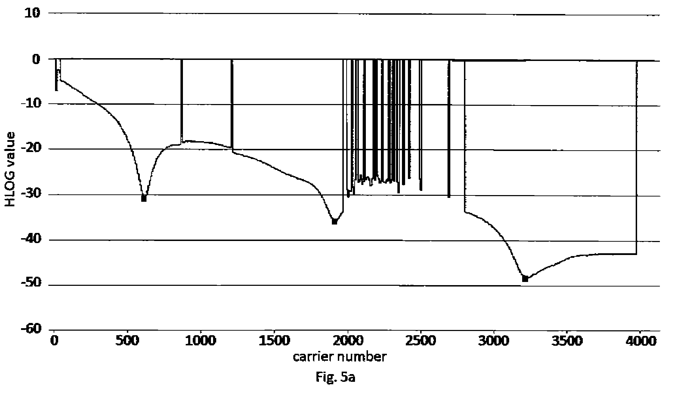

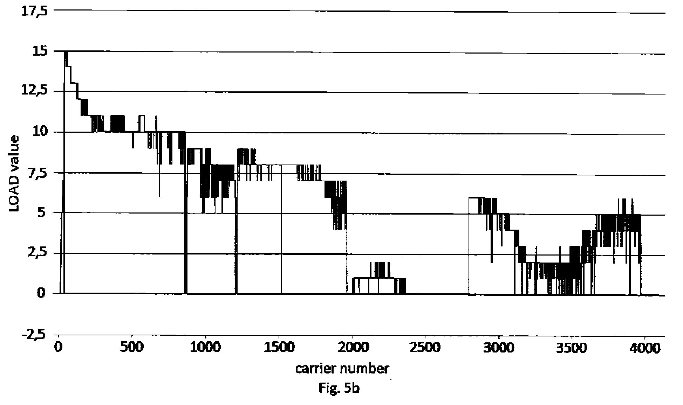

In another embodiment, in which:
- HLOG course (Fig. 5a) has three distinct minima; the course is a continuous course, without additional disturbances, which indicates that the only damage is the bridged tap;
- in the BIT LOAD course (Fig. 5b) there is disturbance in the bit allocation, in particular at the location of the third minimum, which is caused by the bridged tap (due to the increased attenuation device must reduce the number of allocated bits to be able to transmit and receive signal);
- QLN and SNR(f) courses have correct values, because there is no increased noise level;
step 9 of the line damage verification ends thus indicating that the line is not operational because of the bridged tap of a length of approximately 17 metres and without disturbing the capacitive symmetry between the copper wires.

At step 9 of the line damage verification a detection of minima is used. One possible way is to detect minima in accordance with the following steps (Fig. 7):
1. Detection of minima involves finding the minimum of the function in a specified minimum interval. The minimum interval, and thus the width of the minimum, is defined by two parameters: *minGroupSize* and *interval.* The *interval* parameter defines the step between each testing of the HLOG course (because DSLAMs return HLOG every 8 carriers, so the *interval* parameter is set to 8). The *minGroupSize* parameter specifies a minimum set of carriers, in which there is a minimum. The carriers are taken into account every step of the *interval* parameter, so with the setting of *minGroupSize* to 8 the minimum number of carriers is 8 * 8 = 64 (after multiplying by the value of 4.3125 kHz in frequency).
2. A detection of a minimum in the range of a width of *GroupSize* is followed by the search for maxima on the left and the right of the minimum. There are defined two *minGradient* constants (one for searching on the left side, and the other for searching on the right side of minima), meaning the minimum slope of the minima. More specifically, the value determines the minimum step of HLOG while searching for maximum at each transition to the next carrier (with the step of *interval*). To detect minima of a "wide bottom", i.e. those which have the minimum value on more than one carrier, the condition of checking the minimum step is activated only after the first change of the HLOG value by the *minGradient* value or more. After activating this condition, the HLOG value after transition to another carrier does not increase by the *minGradient* value, the search for the maximum is interrupted and the last value is considered to be the maximum.
3. After finding minima and maxima the condition of a depth of the minimum is checked. The minimum depth (when searching HLOG) is taken from the parameters *minDiffMaxMinTap* (1.5 dB) or *minDiffMaxMinCapacity* (5 dB), depending on whether the capacity is searched for, or the bridged tap. For the search for BIT LOAD the minimum depth minimum is 3 carriers.
4. Then the condition of a width of the minimum is checked. The distance between the maximum on the left and the right side, and the minimum should amount to at least *minIntevalBetweenMaximumMinimum* * *GroupSize* * *interval.* Setting *minIntevalBetweenMaximumMinimum* to 0.5 means that the minimum must be in the middle of the range, and maxima at its ends. This setting is the default and works very well because the window of a width of *GroupSize* moves with the step 1 * *interval,* so at some point it is "fitting" on the centre of the minimum.

When step 9 of the line damage verification is completed positively, i.e. there is no damage to the subscriber line and no corrective actions are needed to be performed, this information at step 10 is saved in the database 17 and at step 11 transmitted back to the device 21 that issues measurement requests, at step 12a the default settings of the port parameters are restored and at step 12b the steps of the method are completed. However, in a situation when there are problems on the line and at step 14 it is necessary to perform corrective actions included in the proceeding instructions, this information at step 10 is saved in the database 17 and along with the proceeding instructions at step 11 it is transmitted back to the device 21 that issues measurement requests.

In various embodiments, the measurement procedure for the method for qualifying the subscriber line can be performed in different locations:
- MDF - main distribution frame;
- CC - cable cabinet;
- AP - access point;
- SUB1 - subscriber installation entry;
- SUB - subscriber's premises.

In the embodiment in which the point of measurement is the main distribution frame (MDF), between the step of retrieving the subscriber line parameters, and the step 10 of writing data into the database 17, at step 7 only the achieved subscriber line bitrate is verified. In the locations CC, AP and SUB1 all the steps except step 8 of the link stability verification are performed. In the location SUB all the steps of the method for qualifying the line, as previously described, are performed.

For example, during the qualification of the subscriber line it may be required to carry out the measurement on the main distribution frame (MDF) and at the Subscriber's (SUB). This means that the entire method is performed at least twice. If in any of these two locations the result of any step will be negative, then to the device 21 that issues measurement requests, i.e. to the technician, there are transmitted feedback messages at steps 11 and 13 ordering making repairs and carrying out the method all over again. The system 22 on the basis of the achieved results indicates what is wrong and what needs to be improved.

The method for qualifying the subscriber line can be carried out by the system 22 in the form of a reporting platform. Then the system 22 includes:
a) the application server, such as Tomcat, GlassFish, JBoss Application Server;
b) the application 16 running on the application server, which receives messages initiating measurements, coordinates the particular steps of the method, transmits at steps 11 and 13 results and feedback messages. The application 16 has multiple interfaces to third party systems, such as:
   - the interface to the inventory system (retrieving registration data about the service);
   - the interface to the prequalification system (exporting measurement data for the purposes of prequalification);
   - the interface to the SMS gateway for retrieving messages transmitted by technicians 21 and transmitting the replies;
   - the interface to the database 17;
   - the Web type interface for users allowing browsing the measurement results.
c) the database 17 for storing measurement results and other data (a list of system 22 users, their logins, passwords). The database 17 is a repository of the results of the measurements that have been performed. It additionally comprises a record of the instructions that have been transmitted.

The application server is responsible for:
- remote communication with the technician working with the device 21 which may be with the use of either text messages or data transmission;
- identification of the customer premises equipment 20, for which the measurement is carried out;
- communication with the active network devices (e.g. DSLAM/OLT 19), using management protocols they support;
- analysis of data collected from network devices;
- writing data at step 10 into the database 17, which is a repository of results;
- based on the collected data, announcing the verdict for further instructions for the technician working with the device 21.

The system 22 can be implemented in different locations, for example on a dedicated server or as the part of management system NMS (Network Management Station). In the embodiment in which the location of implementation of the system 22 is the server 15, there should be implemented its own communication between DSLAM 19 and the server on the basis of the documentation of the manufacturer of DSLAM 19. In the embodiment in which the location of implementation of the system 22 is NMS, the system 22 is provided by the manufacturer of DSLAM 19, and the communication is implemented by it and performed automatically, i.e. the step of retrieving the data is greatly simplified because the system 22 can use the data already available on the NMS.

The customer premises equipment 20 is not a direct component of the system 22, but is one of the key and necessary components allowing implementations of the method for qualifying the subscriber line. The customer premises equipment 20 is responsible for the termination signal from the access network. It can be xDSL (ADSL/2/2+, SHDSL, VDSL2) modem, as well as an ONT unit terminating fibre optic line. A key factor is to ensure compliance of the customer premises equipment 20 with devices offered by service provider to its customers, allowing to achieve maximum reliability of the results, and thus, to make the right decision about further activities.

The embodiments are presented herein only as a non-limiting indication concerning the invention and do not limit the scope of protection that is defined by patent claims.

## Claims

1. A method for qualifying a subscriber line, wherein the line parameters are retrieved by the system, data is written into a database and proceeding instructions are transmitted, **characterised in that** prior to the step of line parameters retrieving (6) a subscriber access device is connected (1) to the subscriber line, then, using a communication channel, through a device (21) that issues measurement requests, the request for initialisation of diagnostic measurements is transmitted (2), using a server (15), on a central office device (19), port is configured (3) and, using the server (15), synchronisation is verified (4) and the customer premises equipment (20) is verified (5), wherein after retrieving (6) the line parameters and prior to the step of writing (10) data into the database (17), in the event of positive verification of the earlier steps (4, 5), the achieved bitrate of the subscriber line is verified (7), the link stability is verified (8), and possible damage to the line is verified (9), while after the step of writing (10) data the result of verification along with proceeding instructions is transmitted back (11) through the system (22) to the device (21) that issues measurement requests and through the server (15) the default settings of the port parameters are restored (12a).

2. The method for qualifying according to claim 1, **characterised in that** in the event of negative verification (4) of the synchronisation through the system (22) the result of the verification (3) is transmitted back (13) along with the proceeding instructions to the device (21) that issues measurement requests.

3. The method for qualifying according to claim 1, **characterised in that** in the event of negative verification (5) of the customer premises equipment (20) through the system (22) the result of the verification (5) is transmitted back (13) along with the proceeding instructions to the device (21) that issues measurement requests.

4. The method for qualifying according to claim 1, **characterised in that** in the measurement initialisation request is transmitted (2) at least one identification parameter from a group comprising: service identifier, service version, service type, line identification data, central office device (19) IP address, port number.

5. The method for qualifying according to claim 1 or 4, **characterised in that** at the step of the port configuration (3), through the server (15), there is transmitted to the central office device (19) and set at least one configuration parameter, dependent on the transmitted request, from a group comprising: static configuration parameter and dynamic configuration parameter.

6. The method for qualifying according to claim 5, **characterised in that** as the configuration parameters for the step of the port configuration (3) there is used at least one parameter from a group comprising: port administrative status, physical layer profile name, data link layer virtual port for the Internet service, data link layer virtual port for the TV service, data link layer virtual port for the VoD service, data link layer virtual port for the VoIP service, preferably as the dynamic configuration parameter there is used at least one parameter from a group comprising: static sub-parameter and dynamic sub-parameter.

7. The method for qualifying according to claim 1 or 4, **characterised in that** at the step of verification (4) of the synchronisation the port for the measurement is configured and forced to resynchronise, and as the synchronisation verification (4) parameters there are used port administrative status and port operational status and at least one parameter from a group comprising the number of synchronisation attempts and the number of unsuccessful synchronisation attempts, wherein for the port specified in the request the values of the administrative status and operational status are read and compared with a reference value; in addition, the values of one of the other parameters of the step of synchronisation verification (4) are read at a time interval and the achieved values are compared, wherein in the event of negative results of the previous sub-steps they are repeated with the emergency profile turned on.

8. The method for qualifying according to claim 1, **characterised in that** at the step of verification (5) of the customer premises equipment (20), the customer premises equipment (20) verification (5) parameters are compared with the parameters stored in the database (17) of the system (22), wherein as the parameters of the step of customer premises equipment (20) verification (5) there is used at least one from a group comprising: device serial number, device manufacturer identifier, device software version.

9. The method for qualifying according to claim 1, **characterised in that** at the step of the achieved bitrate verification (7) the achieved bitrate is compared with the parameters for the point in which measurements are done.

10. The method for qualifying according to claim 1, **characterised in that** as the link stability verification (8) parameters there is used at least one parameter from a group comprising: FEC parameter, CRC parameter, SES parameter, ES parameter, HEC parameter, the number of synchronisation attempts, the number of unsuccessful synchronisation attempts, wherein the positive link stability verification (8) is achieved when the values of all the link stability verification (8) parameters are below specified thresholds.

11. The method for qualifying according to claim 1, **characterised in that** as the line damage verification (9) parameters there is used at least one of the parameters: HLOG, QLN, BIT LOAD and SNR(f).

12. The method for qualifying according to claim 1, **characterised in that** at the step of restoring (12a) the default settings, as the parameters there is used at least one from a group comprising: port administrative status, physical layer profile name, data link layer virtual port for the Internet service, data link layer virtual port for the TV service, data link layer virtual port for the VoD service, data link layer virtual port for the VoIP service

13. The method for qualifying according to claim 1, **characterised in that** in the event of performing of the measurement on the main distribution frame between the step of retrieving (6) the subscriber line parameters and the step of writing (10) the data into the database (17), only the achieved subscriber line bitrate is verified (7).

14. The method for qualifying according to claim 1, **characterised in that** transmitting (2) the request via communication channel is carried out by at least one from the group comprising: SMS message, dedicated network service, mobile device application, web site.

15. The method for qualifying according to any one of claims 1 or 2 or 3, **characterised in that** in the proceeding instructions there is used the possible diagnostic information and at least one instruction from the group comprising the instructions: "check the connection quality", "check the presence of connection disruptions", "repeat the measurement", "locate and remove the bridged tap", "locate and remove the source of interference on the line", "change the cable to another", "change the port", "check the efficiency of the subscriber device", "replace the subscriber device", "verify registration data of the service", "end of activities".
